# EUROPÄISCHE PATENTANMELDUNG

(11) **EP 2 605 125 A1**
(43) Veröffentlichungstag der Anmeldung: **19.06.2013**
(21) Anmeldenummer: 12196718.6
(22) Anmeldetag: 12.12.2012
(51) Int. Cl.: G06F 3/14, G09G 5/22, G09G 5/26

(54) **Verfahren zum Darstellen von Grafikelementen auf einen Bildschirm eines elektronischen Endgerätes**

(30) Priorität: 12.12.2011 DE 102011120714
(71) Anmelder: Deutsche Telekom AG, 53113 Bonn (DE)
(72) Erfinder: Finckh, Hans, 50733 Köln (DE); Schrod, Dirk, 60316 Frankfurt am Main (DE)
(74) Vertreter: Braun-Dullaeus, Karl-Ulrich

(57) **Zusammenfassung**

Verfahren zum Darstellen von Grafikelementen auf einem Bildschirm eines elektronischen Endgerätes, insbesondere eines PCs, Tablet-PCs, Mobiltelefons oder eines Notebooks, umfassend die folgenden Verfahrensschritte:
Festlegen eines Betrachtungsabstandswertes,
Festlegen einer Referenzsohriftgröße (H) in Abhängigkeit des Betrachtungsabstandswertes,
Festlegen einer geometrischen Grundeinheit (3) in Abhängigkeit der Referenzschriftgröße (H),

Anzeigen der Graphikelemente (4, 5, 6), insbesondere Rahmen, Logos, Symbole, Bedienelemente oder Eingabebereiche, in einer Größe, die von der geometrischen Grundeinheit (3) abhängt.

## Beschreibung

Die Erfindung betrifft ein Verfahren zum Darstellen von Grafikelementen auf dem Bildschirm eines elektronischen Endgerätes, insbesondere eines PCs, eines Tablet-PC, eines Mobiltelefon oder eines Notebook.

Die geräteübergreifende Nutzbarkeit, insbesondere die Lesbarkeit und Bedienbarkeit, insbesondere über einen Touchscreen, ist bei zunehmender Vernetzung und zunehmender Verwendung gleichartiger Applikationen auf unterschiedlichen Endgeräten ein wichtiger Aspekt. Bisher wurde spezielle Software eingesetzt, die zumeist nur auf einzelnen Endgeräten funktioniert. Für Anbieter von Anwendungen und Applikationen, die auf einer Vielzahl von Arten von Endgeräten anzuwenden sind, ist zu berücksichtigen, dass der zugeordnete Bildschirm sich häufig durch essenzielle Parameter, wie der Bildschirmauflösung und des Bildschirmformats voneinander unterscheiden. Dennoch ist es erforderlich, dass die Inhalte der Anwendungen auf den entsprechenden Bildschirmen in einer adäquaten Größe ausgegeben werden. Damit soll zum einen die Lesbarkeit sichergestellt werden; zum anderen sollen genügend andere Inhalte angezeigt werden können. Insofern ist für das Anzeigen von Inhalten auf Bildschirmen eine gute Mischung aus Größe und nicht zu hohem Platzverbrauch entscheidend. Ferner ist das Verhältnis zwischen Textanteilen und grafischen Anteilen so zu gestalten, dass es optisch ansprechend ist. Während bei Standardbildschirmgrößen, wie sie für PC's verwendet werden, genügend Platz vorhanden ist, alle gewünschten Informationen auf den zur Verfügung stehenden Ausgabebereich darzustellen, kann es bei kleineren Bildschirmen, beispielsweise von Mobiltelefone, erforderlich sein, die Inhalte entsprechend anzupassen, so dass zum einen das Verhältnis zwischen Text und Grafik stimmt, zugleich aber auch eine Lesbarkeit weiterhin gewährleistet bleibt.

Es ist daher Aufgabe der vorliegenden Erfindung, ein verbessertes Verfahren zum Darstellen von Grafikelementen auf einem Bildschirm eines elektronischen Endgerätes bereit zu stellen. Die der Erfindung zugrundeliegende Aufgabe wird gelöst durch ein Verfahren zum Darstellen von Grafikelementen auf einem Bildschirm eines elektronischen Endgerätes mit den Merkmalen des Anspruch 1. Dieses Verfahren umfasst die folgenden Verfahrensschritte: Festlegen eines Betrachtungsabstandswertes. Anschließend erfolgt ein Festlegen einer Referenzschriftgröße in Abhängigkeit des Betrachtungsabstandswertes. Die Bemessung der Referenzschriftgröße kann in den üblichen Einheiten, beispielsweise einer typografischen Punktgröße, erfolgen. Nachfolgend wird eine geometrische Grundeinheit in Abhängigkeit der Referenzschriftgröße und anschließend ein Anzeigen der Grafikelemente in einer Größe, die von der geometrischen Grundeinheit abhängt, festgelegt.

Als Grafikelemente werden angezeigte Elemente bezeichnet, die nicht Fließtext darstellen, sondern Symbole, Rahmen Hintergrundmuster, Eingabebereiche, Bedienfelder oder andere insbesondere ornamentale Objekte, die allenfalls einzelne Buchstabengruppierungen, z.B. innerhalb von Logos oder Symbolen, umfassen können. Die Referenzschriftgröße ist dabei eine solche Schriftgröße, die in Abhängigkeit des normalen Nutzungskontextes des Endgeräts als Richtwert für eine Ausgestaltung von Fließtexten herangezogen werden kann. Die Referenzschriftgröße kann dabei eine solche Schriftgröße sein, die bei üblichem Benutzen des Endgeräts ein angenehmes Leseerlebnis für den Nutzer darstellt. Die Referenzschriftgröße kann dabei insbesondere lediglich so groß sein, dass genügend Platz für weitere Schriften oder andere Anzeigeelemente vorhanden bleibt; die Referenzschriftgröße ist dabei aber vorzugsweise zumindest so groß, dass ein uneingeschränktes Lesen möglich bleibt. In der Referenzschriftgröße wird üblicherweise Fließtext dargestellt.

So kann vorzugsweise vorgesehen sein, dass die Referenzschriftgröße diejenige Schriftgröße ist, in der beispielsweise ein Zeitungsartikel standardmäßig auf dem Bildschirm z.B. eines Mobiltelefons angezeigt wird. Auf einem PC wird beispielsweise auch dieser Zeitungsartikel in der Referenzschriftgröße angezeigt, wobei allerdings die Referenzschriftgröße in Abhängigkeit der jeweils abweichenden Betrachtungsabstände festgelegt ist. Da der Bildschirm des PC's üblicherweise mit einem deutlich größeren Abstand betrachtet wird als der Bildschirm eines Mobiltelefons, wird die Referenzschriftgröße auch entsprechend größer sein. Abhängig von dieser Referenzschriftgröße werden dann andere Grafikelemente, in Ihrer Größe festgelegt.

Der Kern und die Vorteile der Erfindung liegen insbesondere darin, dass durch das Ausrichten der Größe der Grafikelemente an der Referenzschriftgröße dabei das Nutzererlebnis bei der Bedienung von Applikationen und Anwendung zunächst entkoppelt wird von der Art des jeweiligen Endgeräts. Zugleich kann ermöglicht werden, dass die Anpassung der Grafikelemente an den jeweiligen Bildschirm automatisiert durchgeführt wird. Für einen Anbieter von Anwendungen, welche über eine Vielzahl von Endgeräten mit jeweils unterschiedlichen Betrachtungsabstände und mit unterschiedlichen Anzeigeparametern, wie Auflösung und Bildschirmgröße, dem Kunden zur Verfügung stehen sollen, kann hiermit eine geräteübergreifende softwarebasierte Nutzbarkeit und Konsistenz erzeugt werden, die ein starkes Qualitätsmerkmal im Bereich des Anbietens von Anwendungen bedeuten kann. Zwar wird also die Größe der Graphikelemente entscheidend durch die Betrachtungssituation beeinflusst, zu der auch die Art des jeweiligen Endgeräts gehören kann; es wird allerdings keine konkrete Programmierung mehr für einzelne Arten von Endgeräten erforderlich sein, da sich die gewünschte Größe der Graphikelemente unabhängig von der Art der Endgeräte an dem, zumindest angenommenen, Betrachtungsabstand orientiert.

Die Bedeutung dieser Lösung wächst ständig, da die Vielfalt der möglichen Bildschirme und entsprechenden Bildschirmformaten und Auflösungswerten ständig zunimmt. Die unterschiedlichen Bildschirme werden dabei häufig mit einem unterschiedlichen Betrachtungsabstand eingesetzt.

Grundsätzlich kann der Betrachtungsabstandswert pauschal für gewisse Arten oder Klassen von Bildschirmen ermittelt werden. Es kann dabei der Betrachtungsabstandswert, also der zumindest angenommene Abstand des Betrachters zum Bildschirm, vom elektronischen Endgerät respektive von dem dazugehörigen Steuerungsverfahren pauschal festgelegt werden. So wird beispielsweise ein üblicher Betrachtungsabstandswert bei einem Fernseher von ca. 3 bis 4 m angenommen, während ein Betrachtungsabstandswert von ca. 30 cm bei einem Mobiltelefon angenommen wird. Da es sich bei diesen Werten allerdings nur um pauschalierte Werte handelt, können diese die reale Situation häufig nur bedingt widerspiegeln, so dass der festgelegte Betrachtungsabstandswert nicht unbedingt dem realen Betrachtungsabstand entspricht, aber dennoch für weiteren Größenbestimmungen verwendet wird.

In einer bevorzugten Ausgestaltung kann vorgesehen sein, dass der Betrachtungsabstandswert anhand von geometrischen Anzeigeparametern des Bildschirms, wie insbesondere einer Bildschirmauflösung und/oder einer Bildschirmgröße, ermittelt wird. Tabellarisch kann dabei ein Verhältnis zwischen den geometrischen Anzeigeparametern und einem wahrscheinlichen Betrachtungsabstand hinterlegt sein. Der wahrscheinliche Betrachtungsabstand wird dann als Betrachtungsabstandswert dem weiteren Verfahren zugrunde gelegt.

Bevorzugt ist allerdings, dass der Betrachtungsabstand mittels einer Sensoreinheit ermittelt wird und dann als Betrachtungsabstandswert verwendet wird. Häufig werden heutzutage Infrarotfernbedienungen zum Bedienen von Fernsehern oder anderen Endgeräten verwendet. Dabei kann das Infrarotsignal oder ein anderes Signal der Fernbedienung verwendet werden, um die Entfernung zu ermitteln. Es können insbesondere die Stärke des Infrarotsignals oder Laufzeitdifferenzen Rückschlüsse auf die Entfernung zulassen.

Alternativ kann ein Betrachtungsabstandswert aber auch durch einen Fokussierungswert, wie beispielsweise der Brennweite, einer Bilderfassungseinheit ermittelt werden. Dabei wird insbesondere durch eine Webcam oder Ähnliches das Gesicht des Nutzers erkannt und scharf gestellt. Je nachdem, auf welche Fokussierungsebene die Webcam dann scharf gestellt ist, können Rückschlüsse auf den Abstand des Nutzers von der Bilderfassungseinheit geschlossen werden. Dabei ist die relative Position der Bildaufnahmeeinheit zum Bildschirm bekannt, beispielsweise bei einer Webcam, die am Monitor selbst befestigt ist.

Vorzugsweise ist die geometrische Grundeinheit durch eine Nutzereingabe abänderbar. Insbesondere kann dies nützlich sein für eine Umstellung des elektronischen Endgeräts in einer Art Seniorenmodus, bei dem grundsätzlich eine größere Schriftgröße verwendet wird. In Abhängigkeit der dann vergrößerten Schriftgröße sollen dann auch sämtliche anderen Grafikelemente vergrößert angezeigt werden, was durch eine pauschale Vergrößerung der geometrischen Grundeinheit erfolgt.

Vorzugsweise ist vorgesehen, dass zunächst überprüft wird, ob der Betrachtungsabstand mittels eines Sensors ermittelt werden kann. Dann wird der ermittelte Betrachtungsabstand als Betrachtungsabstandswert festgelegt. Sollte die Überprüfung ergeben, dass der Betrachtungsabstand nicht mittels eines Sensors ermittelt werden kann, so wird der Betrachtungsabstandswert nach einer der anderen genannten Arten festgelegt.

Das Verfahren eignet sich insbesondere dafür, um auf einer Vielzahl von Arten von Endgeräten mit unterschiedlichen Bildschirmen unterschiedlichen Formats ausgeführt zu werden.

Die Erfindung wird nachfolgend anhand der Figuren näher erläutert. Hierin zeigt:
- Figur 1: schematisch das Abstandsverhältnis unterschiedlicher Anzeigeformate zum Auge eines Betrachters,
- Figur 2: schematisch das Ermitteln einer geometrischen Grundeinheit in Abhängigkeit einer Referenzschriftgröße,
- Figur 3: das Anzeigen eines Grafikelements in Form eines Rahmens in Abhängigkeit der geometrischen Grundeinheit.

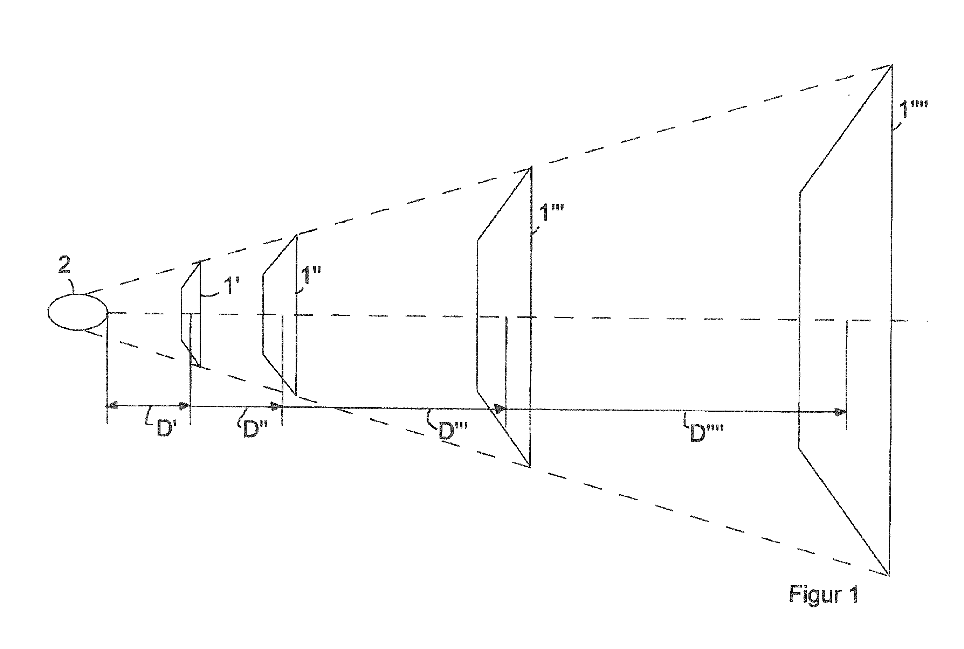

In Figur 1 sind unterschiedliche Bildschirme 1 und die dazugehörigen üblichen Betrachtungsabstände zu dem menschlichen Auge 2 schematisch dargestellt. So beträgt ein üblicher Betrachtungsabstand D' eines Bildschirms 1' eines Mobiltelefons in etwa 30 cm, ein üblicher Betrachtungsabstand D" eines Bildschirms 1" eines Tablet-PCs in etwa 40 cm, ein üblicher Betrachtungsabstand D'" eines Bildschirms 1"' eines Desktop-PCs in etwa 50 cm und ein üblicher Abstand D"" eines Bildschirms 1"" eines Fernsehers in etwa 3 bis 4m. Diese Betrachtungsabstände werden z. B. anhand der Art des Bildschirms pauschal festgelegt. Alternativ kann auch über bereits genannte Möglichkeiten der Betrachtungsabstand über Sensoren ermittelt werden oder anhand von geometrischen Anzeigeparametern des Bildschirms ein wahrscheinlicher Betrachtungsabstand ermittelt werden. Die üblichen Betrachtungsabstände können dann als Betrachtungsabstandswert festgelegt werden.

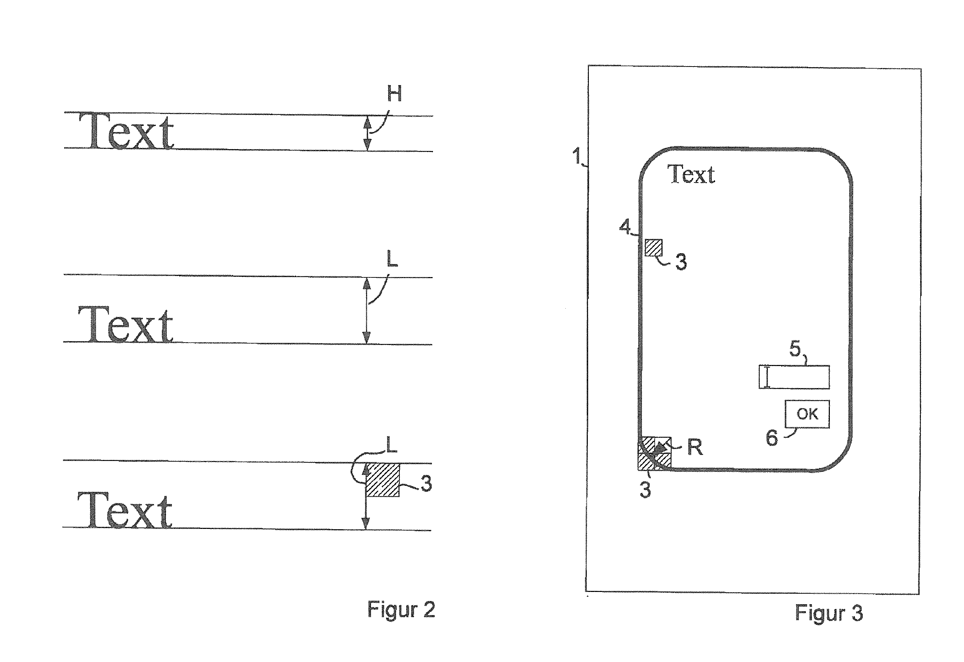

Aus dem festgelegten Betrachtungsabstandswert wird zunächst eine Referenzschriftgröße festgelegt. Die Referenzschriftgröße kann in Abhängigkeit des Betrachtungsabstandswertes tabellarisch hinterlegt sein und aus solchen Tabellen ermittelt werden. Die Referenzschriftgröße hat, wie in Figur 2 dargestellt, einen Wert H, beispielsweise 1 cm. Abhängig von der Referenzschriftgröße H wird dann eine Zeilenhöhe L festgelegt, die beispielsweise 150 % der Referenzschriftgröße H betragen kann. In Abhängigkeit der Zeilenhöhe L wird dann eine Geometrische Grundeinheit 3 festgelegt, die im vorliegenden Ausführungsbeispiel durch ein Quadrat mit der Seitenlänge einer halben Zeilenhöhe L gebildet ist.

In Figur 3 ist illustriert, wie in Abhängigkeit von der geometrischen Grundeinheit 3 Grafikelemente angezeigt werden. In Fig. 3 ist beispielsweise ein Rahmen 4 als Grafikelement gezeigt, der je nach Betrachtungsabstand unterschiedlich dargestellt werden soll. Zum Festlegen der Strichbreite des Rahmens wird dann die geometrische Grundeinheit 3 herangezogen. Im vorliegenden Fall beträgt die Strichstärke des Rahmens 25% der Seitenlänge der geometrischen Grundeinheit 3. Es ist natürlich ersichtlich, dass die Strichstärke jeden anderen Wert aufweisen kann. Das besondere dabei ist aber, dass in der Anwendung nun nicht mehr die absolute Strichstärke des Rahmens 4 hinerlegt ist, sondern vielmehr ein Wert, der einen Größenbezug zur geometrischen Grundeinheit 3 ausdrückt. Im vorliegenden Fall kann also in der Anwendung festgelegt sein, dass der Rahmen 4 quasi mit einem elektronischen Stift gezeichnet werden soll, der eine Dicke von 25% der "Größe" der geometrischen Grundeinheit aufweist, im vorliegenden Fall die Seitenlänge des entsprechenden Quadrats 3. Da die geometrische Grundeinheit selbst wiederum abhängig ist von der Referenzschriftgröße kann sichergestellt werden, dass der Rahmen und oder andere Grafikelemente stets in einem angemessenen Verhältnis zur Referenzschriftgröße stehen und damit auch in einem angemessenen Verhältnis zum Betrachtungsabstand.

Ferner ist die Abrundung der Ecken des Rahmens 4 durch die geometrische Grundeinheit 3 gezeigt. So beträgt der Radius R der Abrundung das Doppelte der Seitenlänge des Quadrates 3. Als weitere Graphikelemente, auf die das Verfahren anwendbar ist, sind auch Eingabebereiche 5 und Bedienelemente 6 und ähnliches denkbar, die in einem vordefinierten Größenverhältnis zur geometrischen Grundeinheit 3 angezeigt werden.

Es ergibt sich ferner auch eine Vereinfachung der Programmierung der Anwendungen, da nunmehr nicht mehr für jegliche unterschiedlichen Bildschirme sämtliche Größen genau vordefiniert werden müssen; vielmehr reicht es aus, lediglich einen einzigen Wert, nämlich den mathematischen Bezug des Grafikelementes zur geometrischen Grundeinheit einzuprogrammieren. Der Vorteil liegt also darin, dass die Anwendung selbst weiß oder zumindest nachvollziehen kann, wie Grafikelemente in Ihrer Dimension anzuzeigen sind, ohne dass zu jedem möglichen Bildschirm entsprechende einzelne Werte hinterlegt sein müssen.

### Bezugszeichenliste

- 1: Bildschirm
- 2: Auge des Betrachters
- 3: geometrische Grundeinheit
- 4: Rahmen
- 5: Eingabebereich
- 6: Bedienelement

- H: Referenzschriftgröße
- L: Zeilenhöhe
- R: Radius
- D: Betrachtungsabstand

## Patentansprüche

1. Verfahren zum Darstellen von Grafikelementen auf einem Bildschirm eines elektronischen Endgerätes, insbesondere eines PCs, Tablet-PCs, Mobiltelefons oder eines Notebooks, umfassend die folgenden Verfahrensschritte:
Festlegen eines Betrachtungsabstandswertes,
Festlegen einer Referenzschriftgröße (H) in Abhängigkeit des Betrachtungsabstandswertes,
Festlegen einer geometrischen Grundeinheit (3) in Abhängigkeit der Referenzschriftgröße (H),
Anzeigen der Graphikelemente (4, 5, 6), insbesondere Rahmen, Logos, Symbole,
Bedienelemente oder Eingabebereiche, in einer Größe, die von der geometrischen Grundeinheit (3) abhängt.

2. Verfahren nach Anspruch 1, **dadurch gekennzeichnet, dass** Fließtext in der Referenzschriftgröße (H) am Bildschirm (1) ausgegeben wird.

3. Verfahren nach einem der vorherigen Ansprüche, **dadurch gekennzeichnet, dass** die geometrische Grundeinheit (3) in einer definierten mathematischen Beziehung zur Referenzschriftgröße (H) steht.

4. Verfahren nach einem der vorherigen Ansprüche, **dadurch gekennzeichnet, dass** in einem Programm eine mathematische Beziehung zwischen der Größe von Graphikelementen (4, 5, 6) und der geometrischen Grundeinheit (3) hinterlegt ist.

5. Verfahren nach einem der vorherigen Ansprüche, **dadurch gekennzeichnet, dass** Verhältnisse zwischen Referenzschriftgrößen (H) und Betrachtungsabstandswerten tabellarisch hinterlegt sind.

6. Verfahren nach einem der vorherigen Ansprüche, **dadurch gekennzeichnet, dass** der Betrachtungsabstandswert anhand von geometrischen Anzeigeparametern des Bildschirms, wie insbesondere einer Bildschirmauflösung und/oder einer Bildschirmgröße, ermittelt wird.

7. Verfahren nach einem der vorherigen Ansprüche, **dadurch gekennzeichnet, dass** ein Betrachtungsabstand (D) mit Hilfe einer Sensoreinheit ermittelt wird, insbesondere durch Ermittlung des Abstandes einer Fernbedienung, und als Betrachtungsabstandswert festgelegt wird.

8. Verfahren nach einem der vorherigen Ansprüche, **dadurch gekennzeichnet, dass** ein Betrachtungsabstand (D) anhand eines Fokussierungswertes, wie einer Brennweite, einer Bilderfassungseinheit ermittelt wird und als Betrachtungsabstandswert festgelegt wird.

9. Verfahren nach einem der vorherigen Ansprüche, **dadurch gekennzeichnet, dass** die geometrische Grundeinheit durch eine Nutzereingabe abänderbar ist.
